# EUROPÄISCHE PATENTSCHRIFT

(11) **EP 2 128 514 B1**
(45) Veröffentlichungstag und Bekanntmachung des Hinweises auf die Patenterteilung: **25.05.2011**
(21) Anmeldenummer: 09005891.8
(22) Anmeldetag: 28.04.2009
(51) Int. Cl.: F17D 1/08

(54) **Leitung zur Führung eines Mediums**
Conduit for guiding a medium
Conduite destinée au transport d'un milieu

(30) Priorität: 27.05.2008 DE 102008025226
(43) Veröffentlichungstag der Anmeldung: 02.12.2009
(73) Patentinhaber: Linde AG, 80331 München (DE)
(72) Erfinder: Adler, Robert, 2201 Gerasdorf (AT); Stehrlein, Martin, 3451 Rust (AT)
(74) Vertreter: Zahn, Christoph

(56) Entgegenhaltungen:
- EP-A1- 1 705 050
- WO-A1-00/04321
- DE-A1- 3 703 841
- DE-C1- 19 632 991
- DE-U1- 8 321 728
- GB-A- 2 290 848
- US-A- 2 475 635
- US-A- 4 653 541
- US-A- 5 076 242
- US-A1- 2005 005 986

## Beschreibung

Die Erfindung betrifft eine Anordnung zur Führung eines Mediums gemäß dem Oberbegriff des Patentanspruches 1 .

Eine gattungsgemäße Anordnung zur Führung eines Mediums ist aus der DE-B 19632991 bekannt. Derartige Anordnungen kommen beispielsweise bei Wasserstoff-Tankstellen zur Anwendung. Hierbei wird der auf einen Druck zwischen 25 und 900 bar verdichtete Wasserstoff in gasförmiger Form von dem Verdichter zu der Abgabe- bzw. Zapfsäule transportiert. Der verdichtete Wasserstoff wird hierbei üblicherweise auf eine Temperatur von ca. -20 °C abgekühlt. Die Wegstrecke bzw. Leitungslänge zwischen Verdichter/Kühler und Zapfsäule beträgt üblicherweise zwischen 1 und 70 Meter. In herkömmlichen Leitungen, die länger als 10 bis 12 Meter sind, erfolgt eine unerwünschte Anwärmung des verdichteten Wasserstoffs auf Umgebungstemperatur.

Auch mittels einer Isolierung derartiger Leitungen kann eine Erwärmung des verdichteten Wasserstoffs auf Umgebungstemperatur nicht verhindert werden, da der Wasserstoff aufgrund seines hohen Wärmeübergangs seine Kälte sofort an die Mediumleitung abgibt, und die Wärme aus der Mediumleitung anzieht. Um das vorbeschriebene Problem zu lösen, wird daher oftmals eine Abkühlung des gasförmig verdichteten Wasserstoffs auf eine Temperatur von bis zu -60 °C realisiert. Dies ist jedoch vergleichsweise energieintensiv und führt bei entsprechend langen Leitungen nicht zum Erfolg. Die eigentliche Mediumleitung, die bspw. der Führung des verdichteten, gasförmigen Wasserstoffs dient, wird daher von einer konzentrisch angeordneten Kältemedium-Rücklauf-Leitung umgeben. In dieser wird ein geeignetes Kühlmittel, beispielsweise Thermoöl, Kohlendioxid und andere geeignete Kälteträger, bei einer Temperatur zwischen -40 und -60 °C, vorzugsweise von -45 °C, im Gleich- oder Gegenstrom zu dem in der Mediumleitung strömenden Medium geführt. Sofern in der unmittelbaren Umgebung bereits ein Kältespeicher, beispielsweise zur Abkühlung des Wasserstoffs, vorgesehen ist, wird als Kühlmittel bevorzugt das Kältemedium dieses Kältespeicher verwendet.

Aufgabe der vorliegenden Erfindung ist es, eine gattungsgemäße Anordnung zur Führung eines Mediums anzugeben, die gegenüber dem Stand der Technik einen noch geringeren Temperatureinfall auf das in der Mediumleitung geführte Medium zur Folge hat.

Zur Lösung dieser Aufgabe wird eine gattungsgemäße Anordnung zur Führung eines Mediums vorgeschlagen, die dadurch gekennzeichnet ist, dass innerhalb des Hüllrohres eine Kältemedium-Vorlauf-Leitung, die mit der Kältemedium-Rücklauf Leitung in direktem Wärmekontakt steht, angeordnet ist.

Die erfindungsgemäße Anordnung weist nunmehr eine Kältemedium-Vorlauf-Leitung auf. Diese dient der Zuführung des Kältemittels in die Kältemedium-Rücklauf-Leitung bzw. der Abführung des Kältemittels aus der vorgenannten Leitung. Es hat sich gezeigt, dass durch das Vorsehen der zusätzlichen Kältemedium-Vorlauf Leitung, die mit der Kältemedium-Rücklauf-Leitung in direktem Wärmekontakt steht, eine weitaus bessere Isolierung der Mediumleitung realisieren lässt, als dies bei den zum Stand der Technik zählenden Anordnungen zur Führung eines Mediums der Fall ist. Die erfindungsgemäße Anordnung zur Führung eines Mediums ermöglicht nunmehr den Transport von verdichtetem, gasförmigem Wasserstoff über ausreichend lange Wegstrecken, wie sie in der Praxis, beispielsweise bei Wasserstoff-Tankstellen, realisiert werden (müssen).

Weitere vorteilhafte Ausgestaltungen der erfindungsgemäßen Anordnung zur Führung eines Mediums, die Gegenstände der abhängigen Patentansprüche darstellen, sind dadurch gekennzeichnet, dass
- das Hüllrohr flexibel ausgebildet ist,
- der Raum zwischen Hüllrohr und Kältemedium-Rücklauf-Leitung zumindest teilweise, vorzugsweise vollständig mit einem Isoliermaterial ausgefüllt ist, wobei als Isoliermaterial PU-Schaum oder Armaflex verwendet und/oder eine Vakuumisolierung vorgesehen wird, und
- Mittel zum Fixieren und/oder Stabilisieren der Mediumleitung, der Kältemedium-Rücklauf-Leitung und/oder der Kältemedium-Vorlauf-Leitung innerhalb des Hüllrohres vorgesehen sind.

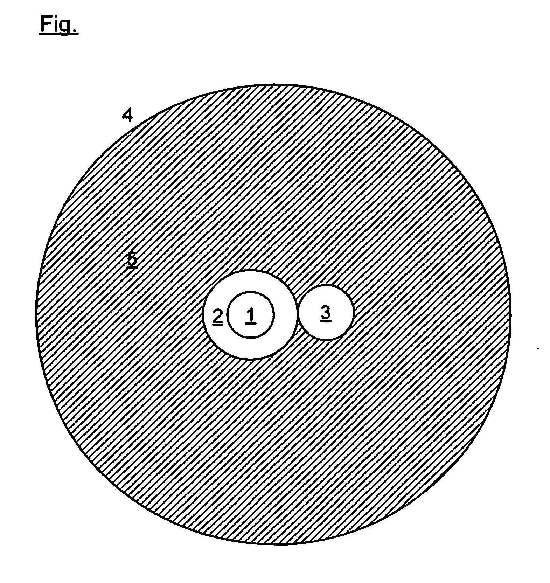

Die erfindungsgemäße Anordnung zur Führung eines Mediums sowie weitere vorteilhafte Ausgestaltungen derselben seien nachfolgend anhand des in der Figur dargestellten Ausführungsbeispieles näher erläutert.

Die Figur zeigt einen nicht maßstabsgerechten Querschnitt durch die erfindungsgemäße Anordnung zur Führung eines Mediums. Diese besteht aus der eigentlichen Mediumleitung 1, in der das zu führende Medium strömt, der die Mediumleitung 1 umgebende Kältemedium-Rücklauf-Leitung 2 sowie der Kältemedium-Vorlauf-Leitung 3.

Des Weiteren kann ein die vorgenannten Leitungen 1 bis 3 umgebendes Hüllrohr 4, das vorzugsweise flexibel ausgebildet ist, vorgesehen sein. In vorteilhafter Weise ist der Raum zwischen Hüllrohr und Kältemedium-Rücklauf-Leitung zumindest teilweise, vorzugsweise vollständig mit einem Isoliermaterial 5 ausgefüllt. Bei diesem Isoliermaterial 5 handelt es sich vorzugsweise um einen PU-Schaum oder es wird eine Vakuumisolierung vorgesehen.

Mittels einer derartigen Isolierung wird der unerwünschte Wärmeinfall aus der Umgebung in die Anordnung bzw. die Mediumleitung 1 wirkungsvoll abgeschwächt.

In der Figur nicht dargestellt sind ggf. vorzusehende Mittel zum Fixieren und/oder Stabilisieren der Mediumleitung 1, der Kältemedium-Rücklauf-Leitung und/oder Kältemedium-Vorlauf-Leitung 3 innerhalb des Hüllrohres 4.

## Patentansprüche

1. Anordnung zur Führung eines Mediums, vorzugsweise von verdichtetem, gasförmigem Wasserstoff, aufweisend eine Mediumleitung (1), eine die Mediumleitung (1) umgebende Kältemedium-Rücklauf-Leitung (2) und ein die beiden Leitungen (1, 2) umgebendes Hüllrohr (4), **dadurch gekennzeichnet, dass** innerhalb des Hüllrohres (4) eine Kältemedium-Vorlauf Leitung (3), die mit der Kältemedium-Rücklauf-Leitung (2) in direktem Wärmekontakt steht, angeordnet ist.

2. Anordnung nach Anspruch 1, **dadurch gekennzeichnet, dass** das Hüllrohr (4) flexibel ausgebildet ist.

3. Anordnung nach Anspruch 1 oder 2, **dadurch gekennzeichnet, dass** der Raum zwischen Hüllrohr (4) und Kältemedium-Rücklauf-Leitung (2) zumindest teilweise, vorzugsweise vollständig mit einem Isoliermaterial (5) ausgefüllt ist.

4. Anordnung nach Anspruch 3, **dadurch gekennzeichnet, dass** als Isoliermaterial PU-Schaum oder Armaflex verwendet wird und/oder eine Vakuumisolierung vorgesehen ist.

5. Anordnung nach einem der vorhergehenden Ansprüche 1 bis 4, **dadurch gekennzeichnet, dass** Mittel zum Fixieren und/oder Stabilisieren der Mediumleitung (1), der Kältemedium-Rücklauf-Leitung (2) und/oder der Kältemedium-Vorlauf-Leitung (3) innerhalb des Hüllrohres (4) vorgesehen sind.

## Claims

1. Arrangement for guiding a medium, preferably compressed, gaseous hydrogen, having a medium line (1), a cooling medium return line (2), surrounding the medium line (1), and a casing (4), surrounding the two lines (1, 2), **characterized in that** a cooling medium inflow line (3), which is in direct thermal contact with the cooling medium return line (2), is arranged inside the casing (4).

2. Arrangement according to Claim 1, **characterized in that** the casing (4) is flexibly formed.

3. Arrangement according to Claim 1 or 2, **characterized in that** the space between the casing (4) and the cooling medium return line (2) is at least partially, preferably completely, filled with an insulating material (5).

4. Arrangement according to Claim 3, **characterized in that** PU foam or Armaflex is used as insulating material and/or a vacuum insulation is provided.

5. Arrangement according to one of the preceding Claims 1 to 4, **characterized in that** means for fixing and/or stabilizing the medium line (1), the cooling medium return line (2) and/or the cooling medium inflow line (3) are provided inside the casing (4).

## Revendications

1. Agencement de guidage d'un milieu, de préférence de l'hydrogène gazeux comprimé, présentant une conduite de milieu (1), une conduite de retour de milieu frigorigène (2) entourant la conduite de milieu (1) et un tube de gainage (4) entourant les deux conduites (1, 2), **caractérisé en ce qu'**une conduite aller de milieu frigorigène (3) qui est en contact thermique direct avec la conduite de retour de milieu frigorigène (2), est disposée à l'intérieur du tube de gainage (4).

2. Agencement selon la revendication 1, **caractérisé en ce que** le tube de gainage (4) est réalisé sous forme flexible.

3. Agencement selon la revendication 1 ou 2, **caractérisé en ce que** l'espace entre le tube de gainage (4) et la conduite de retour de milieu frigorigène (2) est au moins en partie, de préférence complètement, rempli d'un matériau isolant (5).

4. Agencement selon la revendication 3, **caractérisé en ce que** l'on utilise comme matériau isolant une mousse de PU ou de l'Armaflex, et/ou l'on prévoit une isolation sous vide.

5. Agencement selon l'une quelconque des revendications 1 à 4, **caractérisé en ce que** des moyens pour fixer et/ou stabiliser la conduite de milieu (1), la conduite de retour de milieu frigorigène (2) et/ou la conduite aller de milieu frigorigène (3) sont prévus à l'intérieur du tube de gainage (4).
